# DEMANDE DE BREVET EUROPEEN

(11) **EP 0 753 439 A1**
(43) Date de publication de la demande: **15.01.1997**
(21) Numéro de dépôt: 96110961.8
(22) Date de dépôt: 08.07.1996
(51) Int. Cl.: B60S 1/32, B60S 1/40

(54) **Essuie-glace de véhicule automobile muni d'un capot d'habillage recouvrant intégralement l'essuie-glace**

(30) Priorité: 12.07.1995 FR 9508591
(71) Demandeur: VALEO SYSTEMES D'ESSUYAGE, 78321 La Verrière (FR)
(72) Inventeur: Jarasson, Jean-Michel, 93130 Noisy le Sec (FR); Eustache, Jean-Pierre, 92160 Antony (FR)
(74) Mandataire: Gamonal, Didier

(57) **Abrégé**

L'invention concerne un essuie-glace de véhicule automobile, du type dans lequel un bras d'essuie-glace (16) comporte une première extrémité longitudinale (18) montée articulée autour d'un axe (A2), entre une position de service et une position relevée, sur une tête d'entraînement (12) en balayage alterné, du type dans lequel un capot d'habillage (22) est articulé sur la tête d'entraînement (12) et recouvre au moins partiellement la tête d'entraînement (12) et le bras d'essuie-glace (16), du type dans lequel un balai d'essuie-glace est monté à rotation sur le capot (22), et du type dans lequel une seconde extrémité longitudinale (28) du bras (16), opposée à sa première extrémité longitudinale (18) d'articulation, assure l'entraînement en balayage alterné du capot (22) et du balai, caractérisé en ce que le capot d'habillage (22) recouvre intégralement la tête d'entraînement (12), le bras (16) et le balai.

## Description

L'invention concerne un essuie-glace de véhicule automobile.

L'invention concerne plus particulièrement un essuie-glace de véhicule automobile, du type dans lequel un bras d'essuie-glace comporte une première extrémité longitudinale montée articulée autour d'un axe, sur une tête d'entraînement en balayage alterné, du type dans lequel un capot d'habillage est articulé sur la tête d'entraînement et recouvre au moins partiellement la tête d'entraînement et le bras d'essuie-glace, apte à entraîner un balai d'essuie-glace, et du type dans lequel une seconde extrémité longitudinale du bras, opposée à sa première extrémité longitudinale d'articulation, assure l'entraînement en balayage alterné du capot et du balai.

Dans le but de concevoir des essuie-glaces plus esthétiques, dans lesquels les discontinuités de formes sont les moins nombreuses possibles, il est connu d'agencer sur l'essuie-glace un capot d'habillage.

Il a même été proposé, pour des essuie-glace adaptés à un usage peu intensif, par exemple des essuie-glaces de phares, d'utiliser un capot en matière plastique faisant office de bras d'essuie-glace.

Toutefois, une telle solution n'est pas suffisamment rigide pour permettre d'entraîner des essuie-glace plus fortement sollicités tels que des essuie-glace de pare-brise.

Dans ce cas, il a déjà été proposé dans la demande de brevet FR-94.15629 un essuie-glace comportant une tête d'entraînement et un bras d'essuie-glace articulé sur la tête, l'essuie-glace étant muni d'un capot articulé par une première extrémité sur la tête d'entraînement et à la seconde extrémité duquel est accroché un balai d'essuie-glace.

L'extrémité libre du bras d'essuie-glace est reçue dans un logement de l'extrémité du capot qui porte l'essuie-glace de manière à entraîner l'ensemble en balayage alterné.

Toutefois, une telle conception, si elle permet de masquer la tête d'entraînement et le bras d'essuie-glace, laisse apparaître une discontinuité de forme entre le capot d'habillage et le balai d'essuie-glace.

Aussi, dans le but de résoudre ce problème, l'invention propose un essuie-glace du type vu précédemment, caractérisé en ce que le capot d'habillage recouvre intégralement la tête d'entraînement, le bras et le balai.

Selon d'autres caractéristiques de l'invention :
- le capot d'habillage comporte une patte d'accrochage du balai qui s'étend en direction du balai et qui traverse une lumière longitudinale du bras ;
- la patte d'accrochage du balai est guidée transversalement dans la lumière du bras, et en ce que la patte d'accrochage transmet au capot les mouvements de balayage du bras ;
- le balai d'essuie-glace comporte une tige transversale d'articulation qui relie deux ailes latérales longitudinales et qui est emboîtée élastiquement dans un logement complémentaire de la patte d'accrochage du balai ;
- une pièce intermédiaire est interposée entre d'une part la seconde extrémité d'entraînement du bras, et d'autre part le capot le balai pour assurer un guidage transversal du capot et du balai ;
- la pièce intermédiaire est immobilisée longitudinalement par rapport au capot et au balai et elle est montée coulissante sur le bras ;
- la pièce intermédiaire est montée à rotation sur la tige transversale du balai d'essuie-glace ;
- la pièce intermédiaire comporte une plaque supérieure qui est destinée à venir en appui contre une face inférieure du bras et qui est munie d'un trou central pour le passage de la patte d' accrochage, la face supérieure de la plaque est munie, à chacune de ses extrémités longitudinales, d'un arceau transversal à l'intérieur duquel est engagée la seconde extrémité du bras, en ce que la face inférieure de la plaque est munie de deux flancs latéraux qui s'étendent, en direction de la vitre, depuis chacune des ses extrémités transversales, en ce que les flancs comportent chacun une fente qui débouche dans leur bord inférieur et qui est destinée à recevoir la tige transversale du balai, et chacun des flancs s'étend le long de la face interne d'une des ailes latérales du balai afin de guider transversalement le balai ;
- la pièce intermédiaire est montée articulée sur la patte d'accrochage du capot, et elle comporte un logement dans lequel la tige transversale du balai d'essuie-glace est reçue par emboîtement élastique ;
- la pièce intermédiaire comporte un arbre transversal qui relie les deux flancs latéraux et sur lequel la patte d'accrochage du balai est emboîtée élastiquement ;
- la pièce intermédiaire est réalisée par moulage en matière plastique ;
- le capot comporte un dos supérieur transversal qui relie deux flasques latéraux, qui s'étendent depuis le dos en direction de la vitre, et en ce que la patte d'accrochage du balai s'étend depuis le dos, entre les deux flasques ;
- le capot est monté articulé sur la tête d'entraînement par des moyens à emboîtement élastique ;
- le capot d'habillage est réalisé par moulage en matière plastique ;
- le capot est muni d'un déflecteur aérodynamique réalisé venu de matière ;
- le capot d'habillage est muni d'une rampe d'arrosage réalisée venue de matière.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble d'un essuie-glace conforme aux enseignements de l'invention qui est illustré en section longitudinale en position de service, et partiellement en silhouette en position relevée ;
- les figures 2 et 3 sont des vues partielles en coupe longitudinale et à plus grande échelle d'un essuie-glace, respectivement en position de service et en position relevée ;
- la figure 4 est une vue en coupe transversale selon la ligne 4-4 de la ligne 2 ;
- la figure 5 est une vue en perspective éclatée plus détaillée de la réalisation des moyens d'accrochage du balai d'essuie-glace ;
- la figure 6 est une vue similaire à celle de la figure 4 sur laquelle on a représenté un second mode de réalisation de l'invention ;
- la figure 7 est une vue en coupe suivant la ligne 7-7 de la figure 6 ;
- la figure 8 est une vue partielle en perspective avec arrachement de l'accrochage du capot sur la tête d'entraînement.

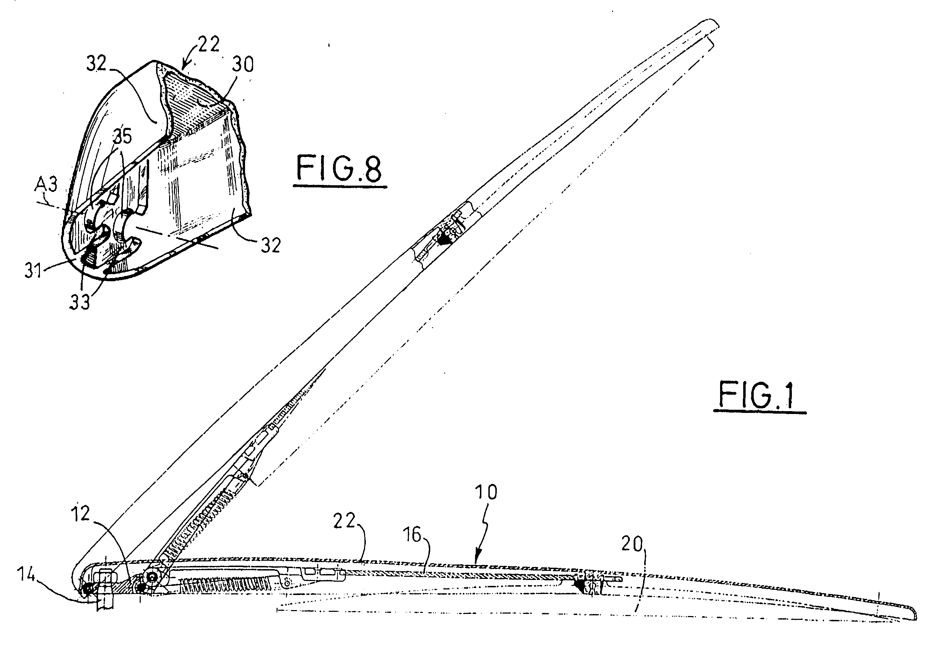

L'essuie-glace 10 représenté sur les figures 1 à 3 comporte une tête d'entraînement 12 qui est montée sur un arbre 14 d'entraînement en balayage alterné, d'axe A1 sensiblement perpendiculaire au plan d'une vitre à essuyer (non représentée) d'un véhicule automobile.

Un bras d'essuie-glace 16 est articulé par une première extrémité longitudinale 18 sur la tête d'entraînement 12, autour d'un axe transversal A2 sensiblement parallèle au plan de la vitre.

La tête 12 du bras 16 sert à l'entraînement en balayage alterné d'un balai d'essuie-glace 20 et d'un capot d'habillage 22 qui, conformément aux enseignements de l'invention, recouvre entièrement la tête d'entraînement 12, le bras 16 et l'essuie-glace 20.

Le capot d'habillage 22 est monté articulé sur la tête d'entraînement 12 autour d'un axe A3, et plus précisément à l'extrémité 24 de la tête 12 opposée à son extrémité 26 sur laquelle est articulée le bras 16.

De la sorte, lorsque l'essuie-glace est amené depuis sa position de service, dans laquelle le balai 20 est plaqué contre la vitre, vers sa position relevée, le capot d'habillage 22 et l'extrémité libre 28 du bras 16 se déplacent longitudinalement l'un par rapport à l'autre du fait de l'éloignement des axes parallèles A2 et A3 d'articulation du capot 22 et du bras 16 et du capot 22.

Le capot d'habillage 22 comporte essentiellement un dos supérieur transversal 30 qui réunit deux flasques latéraux parallèles 32 qui s'étendent depuis le dos 30 en direction de la vitre de manière à recouvrir intégralement l'essuie-glace 10.

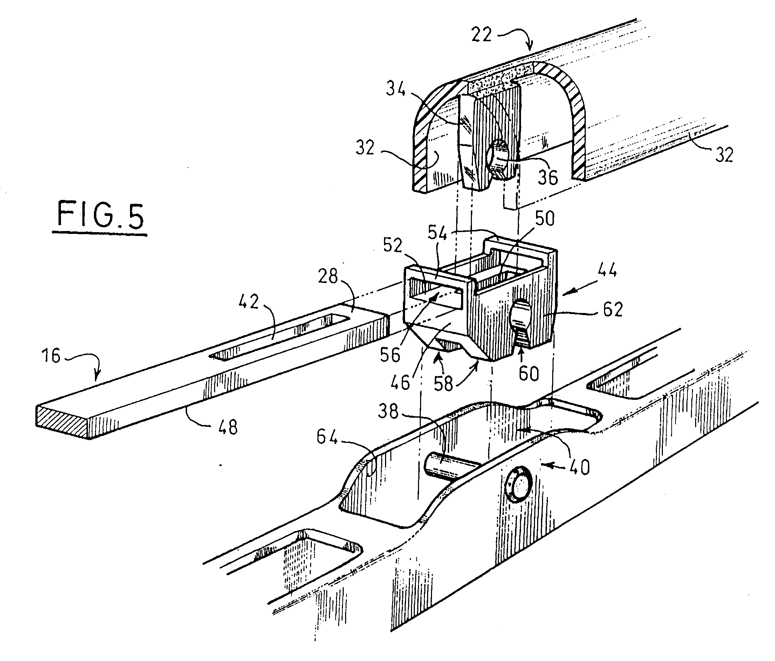

On a représenté sur la figure 8 l'extrémité d'articulation du capot 22 qui comporte une paroi transversale d'extrémité 31 reliant les deux flasques latéraux 32.

On a également réalisé deux voiles longitudinaux 33 qui s'étendent, depuis la paroi transversale d'extrémité 31, entre les flasques latéraux 32. Les voiles 33 comportent deux logements 35 circulaires, d'axe A3, qui sont ouverts suivant la direction longitudinale du capot 22 et qui sont destinés à s'emboîter élastiquement sur une tige d'articulation 37 portée par la tête d'entraînement.

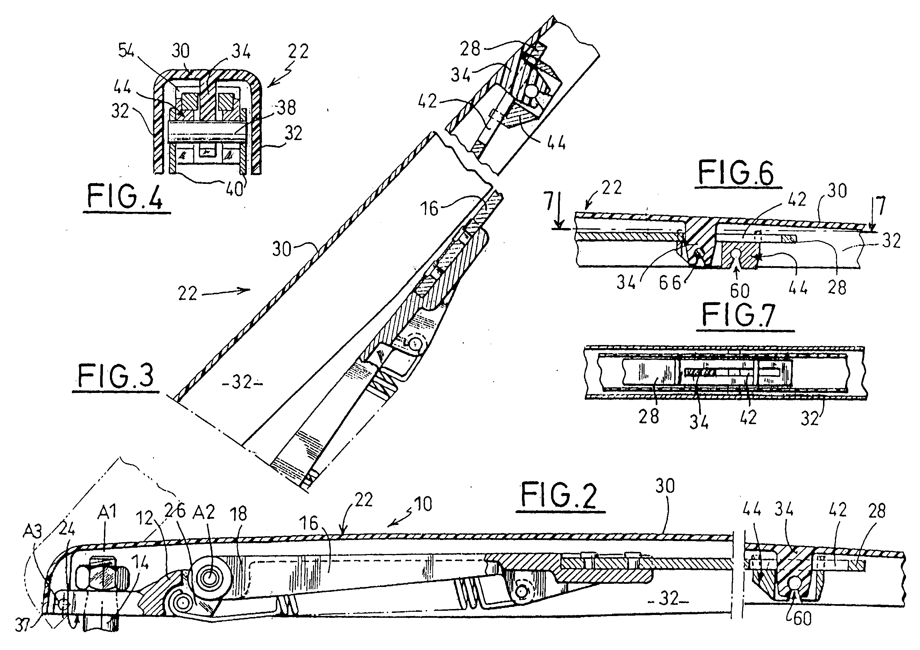

Selon un autre aspect de l'invention représenté sur les figures 2 à 5, le capot 22 comporte une patte 34 d'accrochage du balai d'essuie-glace 20 et qui est réalisée venue de matière avec le capot 22 et qui s'étend depuis le dos supérieur 30, entre les flasques latéraux 32, en direction de la vitre à essuyer.

La patte d'accrochage 34 comporte une fente 36 qui débouche en vis-à-vis de la vitre et qui est destinée à recevoir une tige d'articulation 38 transversale du balai d'essuie-glace 20 qui relie deux ailes 40 du balai.

Cette solution permet d'utiliser un balai d'essuie-glace de conception connue et de conserver son montage articulé par emboîtement élastique qui lui permet de s'adapter au galbe de la vitre à essuyer.

Afin d'assurer l'entraînement en balayage alterné de l'essuie-glace 10, l'extrémité libre 28 du bras 16, qui est une tige de section rectangulaire, comporte une lumière 42 qui s'étend longitudinalement et dans laquelle est reçue la patte d'accrochage 34 du capot 22. La largeur transversale de la lumière 42 correspond sensiblement à l'épaisseur de la patte d'accrochage 34 de sorte que l'entraînement en balayage alterné du capot 22 s'effectue sans jeu et sans à-coups.

La lumière 42 s'étend longitudinalement de telle sorte qu'elle permet un coulissement de la patte d'accrochage 34 par rapport à l'extrémité libre 28 du bras 16 lors du passage de l'essuie-glace 10 de sa position de service à sa position relevée.

Selon un autre aspect de l'invention, il est prévu une pièce intermédiaire 44 qui est agencée entre d'une part le bras 16 et, d'autre part, le capot 22 et le balai 20 et dont le rôle est de permettre un guidage optimal du balai 20 selon une direction transversale de manière à éviter tout jeu générateur de bruits de fonctionnement de l'essuie-glace.

Selon un premier mode de réalisation de la pièce intermédiaire 44 qui est représenté sur les figures 1 à 5, la pièce intermédiaire 44 comporte une plaque supérieure 46 qui est destinée à venir en appui contre une face inférieure 48 du bras 16 et qui comporte un trou 50 sensiblement central qui est prévu pour le passage de la patte d'accrochage 34.

Le trou central 50 est de dimension longitudinale sensiblement égale à celle de la patte d'accrochage 34 de manière à immobiliser longitudinalement la pièce intermédiaire 44 par rapport au capot 22.

La face supérieure 52 de la plaque supérieure 46 de la pièce intermédiaire 44 est munie de deux arceaux 54 qui sont agencés chacun dans un plan transversal et qui délimitent chacun une ouverture 56 dont la section rectangulaire correspond à celle de l'extrémité libre 28 du bras 16.

Ainsi, le bras 16 est susceptible d'être engagé longitudinalement dans les deux arceaux transversaux 54 de manière à guider transversalement la pièce intermédiaire 44 tout en lui laissant la possibilité de coulisser longitudinalement avec le capot 22.

La pièce intermédiaire 44 est également munie de deux flancs latéraux longitudinaux 58 qui s'étendent depuis la plaque supérieure 46 en direction de la vitre à essuyer.

Tout comme la patte d'accrochage 34, les flancs 58 de la pièce intermédiaire 54 sont munis chacun d'une fente 60 dans laquelle la tige transversale 38 du balai 20 est engagée par emboîtement élastique de manière à assurer l'articulation du balai d'essuie-glace 20 par rapport au bras 16.

L'écartement des flancs 58 de la pièce intermédiaire 44 est tel que la pièce 44 est reçue entre les ailes 40 du balai 20 et que les faces latérales externes 62 des flancs 58 sont en appui contre chacune des faces latérales internes 64 des ailes 40 de manière à immobiliser transversalement le balai d'essuie-glace 20 par rapport au bras 16.

Pour le montage du balai 20 sur l'essuie-glace 10, on procède donc de la manière suivante .

La pièce intermédiaire 44 est emboîtée élastiquement sur la tige transversale 38 du balai 20, puis elle est engagée longitudinalement sur le bras 16 grâce à ses arceaux transversaux 54.

Le balai 20 est alors positionné longitudinalement de manière que la tige transversale 38 soit située en regard de la lumière longitudinale 42 du bras 16 afin de permettre l'emboîtement élastique de la patte d'accrochage 34 du capot 22 sur la tige transversale 38, au travers de la lumière 42 du bras 16 et du trou 50 de la pièce intermédiaire 44.

Selon un second mode de réalisation de l'invention qui est représenté sur les figures 6 et 7, la pièce intermédiaire 44 est allongée longitudinalement afin de permettre de décaler la fente 60 d'emboîtement élastique sur la tige 38 du balai 20.

Un arbre transversal 66, semblable à la tige transversale 38 du balai 20, relie les deux flancs 58 de la pièce intermédiaire 44, en regard du trou 50 de la plaque supérieure 46 prévu pour le passage de la patte d'accrochage 34.

Dans ce mode de réalisation, on a découplé la fixation du capot 22 par rapport au balai 20 en fixant le capot 22 sur la pièce intermédiaire 44 et en fixant par ailleurs la pièce intermédiaire 44 sur le balai 20.

Cette solution présente l'avantage que lorsque le balai d'essuie-glace 20 est démonté en vue de son remplacement, le capot 22, la pièce intermédiaire 44 et le bras 16 restent solidaires l'un de l'autre, ce qui évite notamment tout risque de perdre la pièce intermédiaire 44 à ce moment-là.

La réalisation d'un essuie-glace conforme aux enseignements de l'invention présente de nombreux avantages.

Ainsi, l'essuie-glace 10 utilise un balai 20 qui n'est pas modifié par rapport aux balais déjà connus.

De même, la tête d'entraînement 12 et le bras 16 sont d'une conception très proche de la conception actuelle puisqu'il est déjà connu notamment d'utiliser un bras 16 dont l'extrémité libre est formée d'une tige de section rectangulaire dans laquelle il est donc suffisant d'aménager une lumière.

Enfin, la réalisation des deux pièces spécifiques que sont le capot 22 et la pièce intermédiaire 44 peut être réalisée de manière simple et économique par moulage en matière plastique.

Outre son intérêt esthétique, un tel capot, qui s'étend sur toute la longueur de l'essuie-glace, se prête très bien à l'intégration de divers accessoires réalisés venus de matière avec le capot tels qu'un déflecteur aérodynamique ou tel qu'une rampe de distribution de produit de lavage, accessoires dont la fixation sur l'essuie-glace est toujours problématique.

## Revendications

1. Essuie-glace de véhicule automobile, du type dans lequel un bras d'essuie-glace (16) comporte une première extrémité longitudinale (18) montée articulée autour d'un axe (A2), sur une tête d'entraînement (12) en balayage alterné, du type dans lequel un capot d'habillage (22) est articulé sur la tête d'entraînement (12) et recouvre au moins partiellement la tête d'entraînement (12) et le bras d' essuie-glace (16), apte à entraîner un balai d'essuie-glace (20), et du type dans lequel une seconde extrémité longitudinale (28) du bras (16), opposée à sa première extrémité longitudinale (18) d'articulation, assure l'entraînement en balayage alterné du capot (22) et du balai (20), caractérisé en ce que le capot d'habillage (22) recouvre intégralement la tête d'entraînement (12), le bras (16) et le balai (20).

2. Essuie-glace selon la revendication 1, caractérisé en ce que le capot d'habillage (22) comporte une patte d'accrochage (34) du balai (20) qui s'étend en direction du balai (20) et qui traverse une lumière longitudinale (42) du bras (16).

3. Essuie-glace selon la revendication 2, caractérisé en ce que la patte d'accrochage (34) du balai (20) est guidée transversalement dans la lumière (42) du bras (16), et en ce que la patte d'accrochage (34) transmet au capot (22) les mouvements de balayage du bras (16).

4. Essuie-glace selon la revendication 2 ou 3, caractérisé en ce que le balai d'essuie-glace (20) comporte une tige transversale (38) d'articulation qui relie deux ailes (40) latérales longitudinales et qui est emboîtée élastiquement dans un logement (36) complémentaire de la patte d'accrochage (34) du balai (20).

5. Essuie-glace selon l'une quelconque des revendications précédentes, caractérisé en ce qu'une pièce intermédiaire (44) est interposée entre d'une part la seconde extrémité d' entraînement (28) du bras (16), et d'autre part le capot (22) et le balai (20) pour assurer un guidage transversal du capot (22) et du balai (20).

6. Essuie-glace selon la revendication 5, caractérisé en ce que la pièce intermédiaire (44) est immobilisée longitudinalement par rapport au capot (22) et au balai (20), et en ce qu'elle est montée coulissante sur le bras (16).

7. Essuie-glace selon la revendication 5 ou 6, caractérisé en ce que la pièce intermédiaire (44) est montée à rotation sur la tige transversale (38) du balai d'essuie-glace (20).

8. Essuie-glace selon la revendication 7 prise en combinaison avec la revendication 4, caractérisé en ce que la pièce intermédiaire (44) comporte une plaque supérieure (46) qui est destinée à venir en appui contre une face inférieure (48) du bras (16) et qui est munie d'un trou (50) central pour le passage de la patte d'accrochage (34), en ce que la face supérieure (52) de la plaque (46) est munie, à chacune de ses extrémités longitudinales, d'un arceau transversal (54) à l'intérieur duquel est engagée la seconde extrémité (28) du bras (16), en ce que la face inférieure de la plaque (46) est munie de deux flancs latéraux (58) qui s'étendent, en direction de la vitre, depuis chacune des ses extrémités transversales, en ce que les flancs (58) comportent chacun une fente (60) qui débouche dans leur bord inférieur et qui est destinée à recevoir la tige transversale (38) du balai (20), et en ce que chacun des flancs (58) s'étend le long de la face interne (64) d'une des ailes latérales (40) du balai (20) afin de guider transversalement le balai (20).

9. Essuie-glace selon la revendication 8, caractérisé en ce que la pièce intermédiaire (44) est montée articulée sur la patte d' accrochage (34) du capot (22), et en ce qu'elle comporte un logement (60) dans lequel la tige transversale (38) du balai d'essuie-glace (20) est reçue par emboîtement élastique.

10. Essuie-glace selon la revendication 9, caractérisé en ce que la pièce intermédiaire (44) comporte un arbre transversal (66) qui relie les deux flancs latéraux (58) et sur lequel la patte d'accrochage (34) du balai (20) est emboîtée élastiquement.

11. Essuie-glace selon l'une quelconque des revendications 5 à 10, caractérisé en ce que la pièce intermédiaire (44) est réalisée par moulage en matière plastique.

12. Essuie-glace selon l'une quelconque des revendications 2 à 11, caractérisé en ce que le capot (22) comporte un dos supérieur transversal (30) qui relie deux flasques latéraux (32), qui s'étendent depuis le dos (30) en direction de la vitre, et en ce que la patte d'accrochage (34) du balai (20) s'étend depuis le dos (30), entre les deux flasques (32).

13. Essuie-glace selon l'une quelconque des revendications précédentes, caractérisé en ce que le capot (22) est monté articulé sur la tête d'entraînement (12) par des moyens à emboîtement élastique (35, 37).

14. Essuie-glace selon l'une quelconque des revendications précédentes, caractérisé en ce que le capot d'habillage (22) est réalisé par moulage en matière plastique.

15. Essuie-glace selon l'une quelconque des revendications précédentes, caractérisé en ce que le capot (22) est muni d'un déflecteur aérodynamique réalisé venu de matière.

16. Essuie-glace selon l'une quelconque des revendications précédentes, caractérisé en ce que le capot d'habillage (22) est muni d'une rampe d'arrosage réalisée venue de matière.
